# EUROPÄISCHE PATENTANMELDUNG

(11) **EP 1 925 475 A2**
(43) Veröffentlichungstag der Anmeldung: **28.05.2008**
(21) Anmeldenummer: 07022451.4
(22) Anmeldetag: 20.11.2007
(51) Int. Cl.: B60H 1/00

(54) **Kombination eines Kälte-Kreislaufs zur Klimatisierung eines Fahrzeuginnenraums mit einem Rankine-Kreislauf**

(30) Priorität: 24.11.2006 DE 102006055979
(71) Anmelder: Behr GmbH & Co. KG, 70469 Stuttgart (DE)
(72) Erfinder: Burk, Roland, Dipl.-Phys., 70469 Stuutgart (DE); Neumeister, Dirk, Dr., 70374 Stuttgart (DE); Feuerecker, Günther, Dr.rer.nat, 70567 Stuttgart (DE); Zwittig, Eberhard, Dipl.-Ing., 73269 Hochdorf (DE)

(57) **Zusammenfassung**

Die Erfindung betrifft eine Kombination eines Klimaanlagen-Kältekreislaufs (10) zur Klimatisierung eines Fahrzeuginnenraums, enthaltend ein erstes Kältemittel, mit einem Rankine-Kreislauf (20), enthaltend ein zweites Kältemittel, wobei die beiden Kreisläufe (10, 20) zumindest eine Teilstrecke aufweisen, über welche ein Wärmeaustausch der beiden Kältemittel mit einem dritten Medium vorgesehen ist, und in der Teilstrecke die Kältemittel aus den beiden Kreisläufen (10, 20) in gleicher Richtung parallel und benachbart zueinander strömen.

## Beschreibung

Die Erfindung betrifft eine Kombination eines Kälte-Kreislaufs zur Klimatisierung eines Fahrzeuginnenraums mit einem Rankine-Kreislauf gemäß dem Oberbegriff des Anspruches 1.

Im Clausius-Rankine-Prozess wird in einem geschlossenen Kreislauf zunächst Wasser in einem Verdampfer verdampft und ggf. überhitzt, wodurch der Druck ansteigt. In einem nachfolgenden Schritt in einer Turbine (oder einem Arbeitszylinder o.ä.) wird der Dampf entspannt und anschließend in einem Kondensator wieder verflüssigt. Die Umwälzung des Wassers erfolgt mit Hilfe einer Pumpe. Im Rahmen des Prozesses erfolgen die folgenden Zustandsänderungen: 1. Isobare Wärmezufuhr im Verdampfer, wobei das Wasser zunächst bis zum Verdampfungspunkt erwärmt, verdampft und anschließend überhitzt wird. 2. Adiabate Expansion des Dampfes in der Turbine. 3. Isobare und isotherme Kondensation des Dampfes im Kondensator. 4. Adiabate, isentrope Druckerhöhung durch die Pumpe.

Wird an Stelle von Wasser ein anderes Arbeitsmittel verwendet, so bezeichnet man dieses Verfahren als Organic-Rankine-Prozess oder Organic Rankine Cycle (ORC).

Aus der DE 10 2005 047 760 A1 ist eine komplexe Fluidmaschine mit einer Kompressorvorrichtung für einen Kühlkreislauf und einer Expansionsvorrichtung für einen Clausius-Rankine-Kreislauf zum Sammeln von Abwärme von einem Motor mit einem Motor-Kühlwasserkreislauf und ihr Umwandeln in eine Drehkraft bekannt. Hierbei bildet der Verdampfer des Motor-Kühlwasserkreislaufs die Heizvorrichtung für den Clausius-Rankine-Kreislauf. Die so rückgewonnene, im Clausius-Rankine-Kreislauf über die Expansionsvorrichtung umgewandelte Energie wird zum Antrieb der Kompressorvorrichtung verwendet, welche den Kühlkreislauf umwälzt.

Ein einfacher Clausius-Rankine-Kreislauf, welcher die Wärme des Abgases eines Verbrennungsmotors direkt nutzt, ist aus der US 4,406,127 A bekannt. Hierbei wird Wasser aus einem Wasserreservoir mit Hilfe einer Pumpe entnommen und auf den Auspuff des Verbrennungsmotors gesprüht, so dass es verdampft. Das verdampfte Wasser wird durch eine Drossel und Zylinder geleitet. Bei Bedarf wird es nachfolgend in einem Kondensator gekühlt, bevor es wieder dem Wasserreservoir zugeführt wird.

Die DE 28 48 532 A1 offenbart einen Clausius-Rankine-Kreislauf, dessen aus Abwärme rückgewonnene Energie zum Umwälzen des Kältemittels einer Klimaanlage verwendet wird.

Ausgehend von diesem Stand der Technik ist es Aufgabe der Erfindung, eine Kombination eines Kälte-Kreislaufs zur Klimatisierung eines Fahrzeuginnenraums mit einem Rankine-Kreislauf verbesserte zu verbessern. Diese Aufgabe wird gelöst durch eine Kombination eines Kälte-Kreislaufs zur Klimatisierung eines Fahrzeuginnenraums mit einem Rankine-Kreislauf mit den Merkmalen des Anspruchs 1. Vorteilhafte Ausgestaltungen sind Gegenstand der Unteransprüche.

Erfindungsgemäß ist eine Kombination eines Klimaanlagen-Kältekreislaufs zur Klimatisierung eines Fahrzeuginnenraums, enthaltend ein erstes Kältemittel, mit einem Rankine-Kreislauf, enthaltend ein zweites Kältemittel, vorgesehen, wobei die beiden Kreisläufe zumindest eine Teilstrecke aufweisen, über welche ein Wärmeaustausch der beiden Kältemittel mit einem dritten Medium vorgesehen ist, und dass in der Teilstrecke die Kältemittel aus den beiden Kreisläufen in gleicher Richtung parallel und benachbart zueinander strömen. Dadurch, dass die Teilstrecke, in welcher der Wärmeaustausch erfolgt, gemeinsam für die beiden Kreisläufe genutzt werden kann, kann die vorhandene Wärmeübertragungsfläche optimal ausgenutzt werden, auch wenn ggf. nur ein Kreislauf oder -zweig in Betrieb ist.

Gemäß einer bevorzugten Ausführungsform ist für beide Kreisläufe das gleiche Kältemittel, insbesondere bevorzugt R134a, vorgesehen. Hierbei kann bevorzugt ein Kältemittelaustausch zwischen den beiden Kreisläufen vorgesehen sein.

Der Kältemittelaustausch der beiden Kreisläufe erfolgt bevorzugt im Bereich einer gemeinsam durchströmten Teilstrecke der Kreisläufe, die besonders bevorzugt durch mindestens einen gemeinsamen Kondensator gebildet wird. Dabei muss nicht notwendigerweise der gesamte Kondensator die gemeinsame Teilstrecke bilden. Es ist vielmehr möglich, einen Kreislauf an einer weiter in Strömungsrichtung liegenden Stelle des Kondensators einmünden und/oder einen Kreislauf an einer weiter entgegen der Strömungsrichtung liegenden Stelle des Kondensators abzweigen zu lassen. Bevorzugt wird jedoch der gesamte Kondensator vom gesamten Kältemittelstrom durchströmt, so dass ein herkömmlicher Kondensator verwendet werden kann. Anpassungen an die beiden Kreisläufe sind lediglich im Bereich der Anschlussleitungen erforderlich. Ferner lässt sich die gesamte vom Lüfter des Kondensators beaufschlagte Anblasfläche auch dann nutzen, wenn nur einer der Kreisläufe betrieben wird. Das Temperaturniveau des Kältemittels im Kondensator liegt hierbei ausreichend hoch, um die Kondensationswärme mit einer relativ geringen Gebläseleistung an die Umgebungsluft abgegeben werden zu können.

In der gemeinsamen Teilstrecke können auch ein gemeinsamer Sammler und/oder eine gemeinsame Unterkühlstrecke vorgesehen sein. Die Zusammenlegung der Bereiche verringert die erforderliche Anzahl von Bauteilen und somit die Kosten, wie auch das Gesamtgewicht.

Alternativ zu einer Vermischung des Kältemittels der beiden Kreisläufe in einer gemeinsam genutzten Teilstrecke wird die Teilstrecke durch einen gemeinsam genutzten Kondensator mit parallel geführten Leitungen gebildet, welcher für einen Wärmeaustausch mit demselben von einem gemeinsam genutzten Medium, insbesondere Luft, durchströmbar ist. Hierbei sind die Leitungen bevorzugt in Strömungsrichtung des gemeinsam genutzten Mediums hintereinander angeordnet. Zwischen den Leitungen können die wärmeübertragende Oberfläche vergrößernde Strukturen, wie insbesondere Wellrippen, vorgesehen sein.

Bevorzugt ist im Rankine-Kreislauf ein Verdampfer vorgesehen, welcher vom Motor stammende Wärme an das Kältemittel des Rankine-Kreislaufs überträgt. Wird die Wärme über das Motorkühlmittel übertragen, so kann zur Erhöhung des Wirkungsgrades die Regeltemperatur des Motorkühlkreislaufs erhöht werden, insbesondere auf über 100°C und besonders bevorzugt auf über 110°C. Trotz der erhöhten Temperatur im Verdampfer liegen die Kältemitteltemperaturen im Rankine-Kreislauf bei der Verwendung von R134a unter der Zersetzungstemperatur des Kältemittels- Entsprechendes gilt auch bei der Verwendung anderer marktüblicher Kältemittel und Schmierölen.

Das in den Kreisläufen strömende Kältemittel erreicht vorzugsweise in einem Bereich des einen Kreislaufs einen überkritischen Zustand, während es im anderen Kreislauf bei normalen Betriebsbedingungen keinen überkritischen Zustand erreicht.

Besonders bevorzugt ist die Verwendung von R134a oder eines Kältemittels mit ähnlichen thermodynamischen Eigenschaften als Kältemittel im Rankine-Kreislauf und/oder im Klimaanlagen-Kältekreislauf. Ein derartiges Kältemittel ist insbesondere gut für die Verwendung eines Scroll-Expanders im Rankine-Kreislauf geeignet, da bei üblichen Kältemittelströmen der Expansionsvolumenstrom gut zum Hubvolumen und Drehzahlbereich der aus Scroll-Kompressoren abgeleiteten Expandem passt, so dass keine Sonderkonstruktionen für den Expander erforderlich sind und somit die Kosten verringert werden können.

Im Folgenden wird die Erfindung anhand zweier Ausführungsbeispiele unter Bezugnahme auf die Zeichnung im Einzelnen erläutert. Es zeigen:

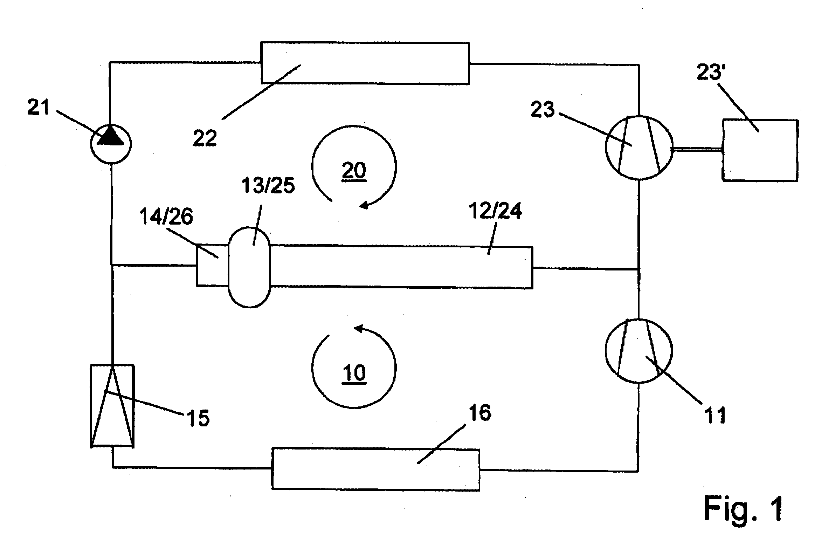

- Fig. 1: eine schematische Ansicht einer Kombination eines Kälte-Kreislaufs zur Klimatisierung eines Fahrzeuginnenraums mit einem Rankine-Kreislauf gemäß dem ersten Ausführungsbeispiel,
- Fig. 2: ein Druck-Enthalpie-Diagramm (p-h-Diagramm) für R134a mit schematisch eingezeichneten Prozessen des Organic-Rankine-Kreislaufs und eines Kältemittel-Kreislaufs, wie sie gemäß dem ersten Ausführungsbeispiel vorgesehen sind,

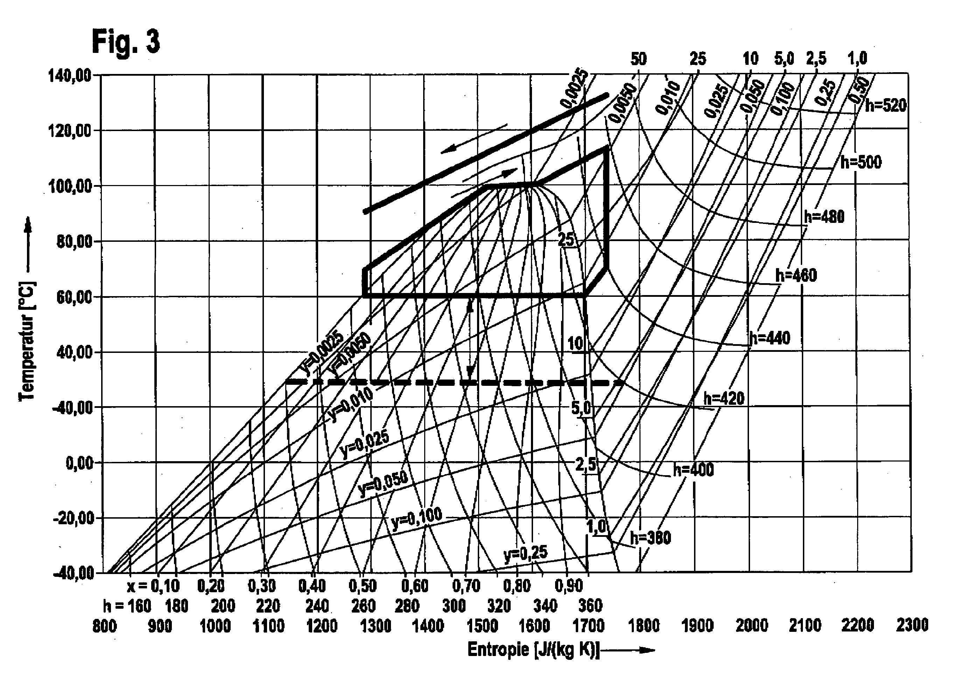

- Fig.3: ein Temperatur-Enthalpie-Diagramm (T-h-Diagramm) für R134a mit ausreichender Rückkondensation des Arbeitsmittels R134a,
- Fig.4: eine schematische Ansicht einer eines Kälte-Kreislaufs zur Klimatisierung eines Fahrzeuginnenraums mit einem Rankine-Kreislauf gemäß dem zweiten Ausführungsbeispiel, und
- Fig. 5a und 5b: schematische Darstellungen von Beispielen für die thermische Kopplung im Bereich der Kondensatoren der beiden Kreisläufe, wie sie gemäß dem ersten oder zweiten Ausführungsbeispiel vorgesehen ist.

Ein Klimaanlagen-Kältekreislauf 10, welcher der Klimatisierung eines Fahrzeuginnenraums dient, weist einen Kompressor 11, einen nachfolgend angeordneten Kondensator 12 mit integriertem Sammler 13 und Unterkühlstrecke 14, ein Expansionsorgan 15 und einen von der dem Fahrzeuginnenraum zuzuführenden Luft durchströmten Verdampfer 16 auf. Als Kältemittel wird vorliegend R134a verwendet, welches im unterkritischen Zustand den Kältekreislauf 10 durchströmt.

Um überschüssige Energie, vorliegend aus dem Motorkühlkreislauf eines Verbrennungsmotors (nicht dargestellt), rückzugewinnen, ist ein Organic-Rankine-Kreislauf 20 vorgesehen, der von einer elektrisch angetriebenen Pumpe 21 umgewälzt wird. Das Kältemittel des ORC-Kreislaufs 20, ebenfalls R134a, wird von der ORC-Pumpe 21 zu einem ORC-Verdampfer 22 gefördert, in welchem das Kältemittel verdampft und überhitzt wird, wofür besagte überschüssige Energie aus dem Motorkühlkreislauf, vorliegend übertragen durch das Motor-Kühlmittel, verwendet wird. Der Verdampfer 22 wird im Gegenstrombetrieb durchströmt, wobei die Wärmeübertragung vorliegend in einer Stufe erfolgt. Es ist alternativ jedoch auch eine mehrstufige Wärmeübertragung möglich.

Um eine ausreichende Temperaturdifferenz zwischen Motor-Kühlmittel und Kältemittel zur Verfügung zu stellen, wird im Motor-Kühlkreislauf vorliegend ein Kühlmittel mit erhöhtem Glycolanteil und ein Überdrucksystem verwendet, wobei eine Regeltemperatur des den Motorkühlkreislauf regelnden Thermostaten von vorliegend 110°C ergibt. Bevorzugte Regeltemperaturen liegen über 100°C, insbesondere über 110°C. An Stelle von Wasser als Kühlmittel können auch andere flüssige Medien, die zur Kühlung des Motors geeignet sind, verwendet werden.

Anschließend an den ORC-Verdampfer 22 wird der überhitzte Dampf des ORC-Kreislaufs 20 in einem ORC-Expander 23 entspannt, wobei mit der gewonnenen Energie ein Generator 23' angetrieben wird. Die Übertragung erfolgt mechanisch, wobei die Leistung oder das Lastmoment des Generators 23' regelbar ist. Beim ORC-Expander 23 handelt es sich vorliegend um eine Volumen-Expansionsmaschine, nämlich einen Scroll-Expander, der ein Volumen-Expansionsverhältnis von 3,0 aufweist. Bevorzugte Volumen-Expansionsverhältnisse derartiger Scroll-Expander liegen zwischen 1,5 und 5,0, insbesondere bevorzugt zwischen 2,0 und 3,5.

Der Dampf gelangt nachfolgend dem Expander 23 zur Rückkondensation in einen ORC-Kondensator 24 mit Sammler 25 und Unterkühlstrecke 26.

Hierbei sind die beiden Kreisläufe 10 und 20 im Bereich des Kondensators 12 oder 24 samt Sammler 13 oder 25 und Unterkühlstrecke 14 oder 26 zusammengelegt, d.h. die Bauteile sind nur einfach vorhanden, wobei in Folge der Zusammenlegung eine Vermischung der Kältemittel verbunden mit einem Temperatur- und Druckausgleich erfolgt. Aus diesem Grund werden die entsprechenden Bauteile in der Zeichnung und im Folgenden mit den Bezugszeichen 12/24, 13/25 bzw. 14/26 bezeichnet.

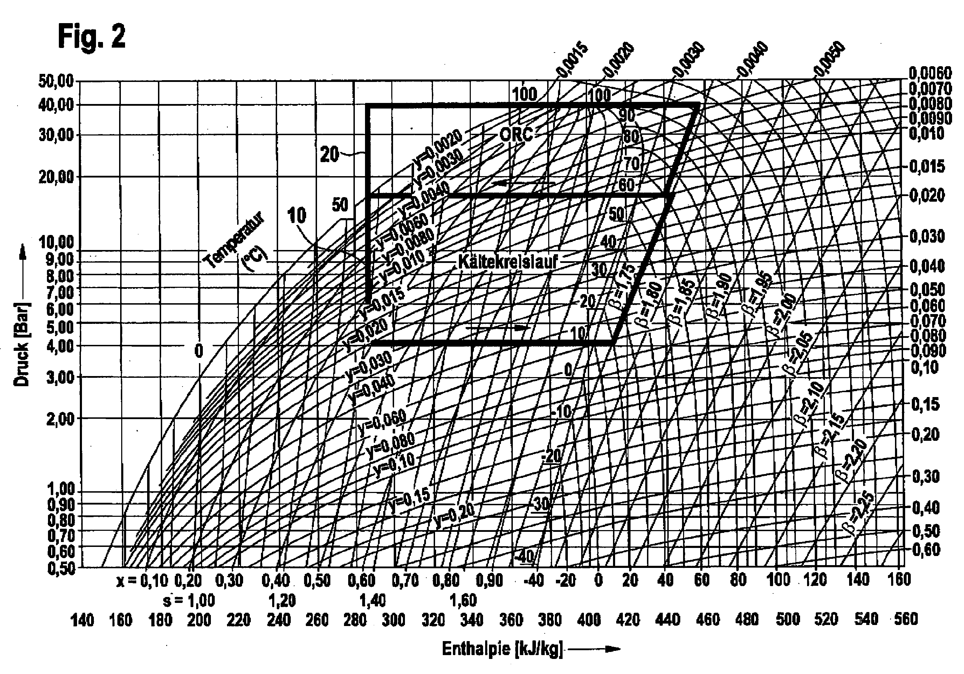

Ein Diagramm mit einer Darstellung des Druckes p über der Enthalpie h für die beiden Kreisläufe 10 und 20 zeigt Fig. 2. In Folge der nachfolgend der Verzweigung im ORC-Kreislauf 20 angeordneten Pumpe 21 erhöht sich der Druck des unterkühlten Kältemittels, während im anderen Zweig in Folge des nachfolgend angeordneten Expansionsorgans 15 der Druck senkt, während in beiden Zweigen die Enthalpie im Wesentlichen konstant bleibt. In den nachfolgend angeordneten Verdampfern 16 bzw. 22 erhöht sich die Enthalpie bei im Wesentlichen konstantem Druck. Anschließend wird durch den Kompressor 11 im Klima-Kältekreislauf 10 der Druck bei im Wesentlichen konstanter Temperatur erhöht, während im ORC-Kreislauf 20 der Druck bei im Wesentlichen konstanter Temperatur im ORC-Expander 23 absinkt. Hierbei erfolgt die Regelung derart, dass der Druck im Bereich des Zusammentreffens der beiden Zweige etwa gleich ist. Wie aus der Darstellung von Fig. 2 ersichtlich, arbeitet der Klima-Kältekreislauf 10 im Wesentlichen im unterkritischen Bereich, während der ORC-Kreislauf 20 diesen Bereich verlassen kann.

Beim Kondensator 12/24 handelt es sich gemäß dem ersten Ausführungsbeispiel im Wesentlichen um einen herkömmlichen luftgekühlten Kühler, wie er üblicherweise zur Kühlung des Kältekreislaufs einer Klimaanlage verwendet wird.

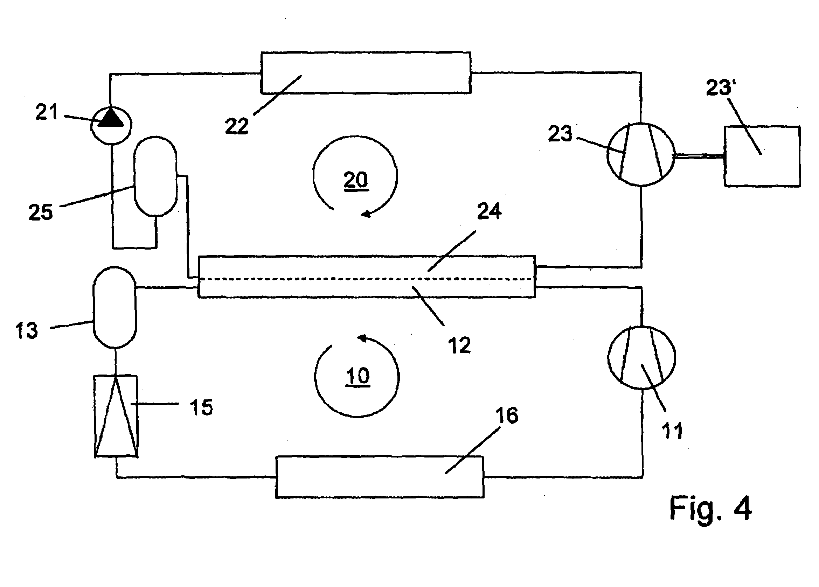

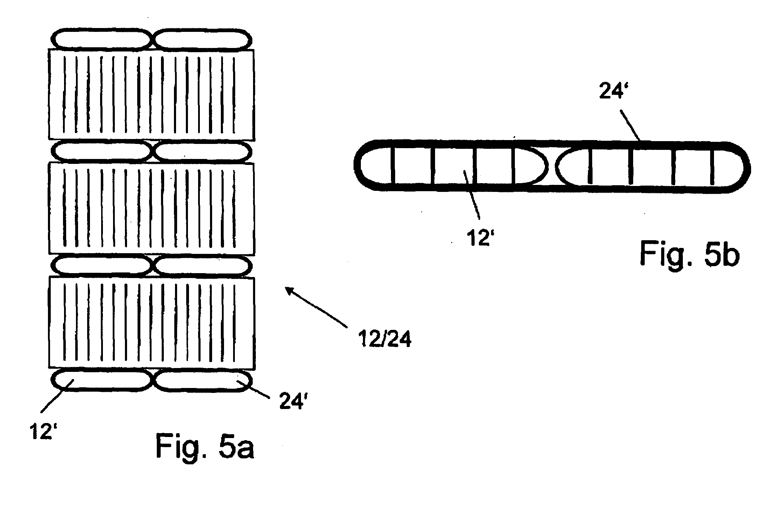

Gemäß dem zweiten, in Fig. 4 dargestellten Ausführungsbeispiel entspricht der prinzipielle Aufbau der Kreisläufe 10 und 20 demjenigen des ersten Ausführungsbeispiels, sofern im Folgenden nicht ausdrücklich erwähnt. Im Unterschied zum ersten Ausführungsbeispiel ist jedoch kein Kältemittelaustausch zwischen den beiden Kreisläufen 10 und 20 vorgesehen, d.h. der gemeinsam durchströmte Kondensator 12/24 entfällt und wird durch einen Kondensator 12 und einen Kondensator 24 ersetzt, die parallel zueinander von den Kältemitteln durchströmt werden und ferner im gleichen Luftstrom angeordnet sind. Vorliegend bilden die Kondensatoren 12 und 24 eine bauliche Einheit (siehe Fig. 5a), wobei parallel dicht nebeneinander verlaufende, aber getrennt ausgebildete Leitungen 12' und 24' in Form von Flachrohren für die beiden Kältekreisläufe 10, 20 vorgesehen sind. Zwischen den Flachrohren sind gemeinsame Wellrippen vorgesehen, so dass die Leitungen 12' und 24' thermisch miteinander gekoppelt sind.

Gemäß einer Variante in Hinblick auf die Ausgestaltung der Leitungen 12', 24' kann, wie in Fig. 5b dargestellt, auch ein gemeinsam genutztes Flachrohr mit Mehrkammerprofil verwendet werden, wodurch die thermische Kopplung zwischen den beiden Leitungen 12', 24' verbessert wird. Hierbei wird ein Teil der Kammern vom Kältemittel des Klimaanlagen-Kältekreislaufs 10 und der andere Teil der Kammern vom Kältemittel des ORC-Kreislaufs 20 durchströmt. Auch in diesem Fall kann eine gemeinsame Wellrippe vorgesehen sein.

Nachfolgend dem vorliegend als bauliche Einheit ausgebildeten, gemeinsam genutzten Kondensator durchströmen die getrennten Kältemittelströme getrennt ausgebildete Sammler 13, 25. Der weitere Aufbau der Kältekreisläufe 10, 20 entspricht dem des ersten Ausführungsbeispiels, so dass hierauf nicht nochmals eingegangen wird.
Beide Sammler könne auch mit einem kombinierten Kondensator eine Baueinheit bilden, wobei abströmseitig nachgelagert Unterkühlstrecken ausgebildet sind.

Auf Grund der Trennung der beiden Kreisläufe in Bezug auf die Kältemittel können unterschiedliche Kältemittel für den Klimaanlagen-Kältekreislauf 10 und den ORC-Kreislauf 20 verwendet werden. Ebenso können deutlich sich unterscheidende Drücke in den Kreisläufen 10 und 20 vorliegen. Auf Grund der thermischen Kopplung erfolgt die Kondensation jedoch im Wesentlichen auf dem gleichen Temperaturniveau.

Die Regelung der bevorzugt in beiden Ausführungsbeispielen elektrisch angetriebenen Pumpe 21 des ORC-Kreislaufs 20 kann in Abhängigkeit der Förderleistung erfolgen. Alternativ ist eine Regelung in Abhängigkeit einer vorgegebenen Druckdifferenz oder eines definierten Druckverhältnisses, einer vorgegebenen Kältemitteltemperatur nach der (letzten) Heizstufe des Verdampfers 22 oder eines vorgegebenen Dichteverhältnisses vor und nach dem Expander 23 möglich.

Die Förderleistung der Pumpe 21 sowie die abgegriffene Leistung des Generators 23' werden gemäß beiden zuvor beschriebenen Ausführungsbeispielen derart geregelt, dass einerseits das Dichteverhältnis des am Expander 23 anliegenden Kältemittels nicht mehr als 50%, insbesondere nicht mehr als 20%, vom Volumenexpansionsverhältnis des Expanders 23 abweicht. Um die im Kondensator an die denselben durchströmende Umgebungsluft abgebbare Wärmemenge bei beiden Ausführungsbeispielen zu erhöhen, werden die Pumpe 21 und der Expander 23 im entsprechenden ORC-Kreislauf 20 derart geregelt, dass im expandierten Zustand nach dem Expander das Kältemittel noch eine definierte Überhitzung aufweist.

Das Kältemittel kann auch ein Arbeitsmittel sein. Das Kältemittel ist insbesondere R134a, R152a, CO2, Blend H oder ein ähnliches Mittel.

## Patentansprüche

1. Kombination eines Klimaanlagen-Kältekreislaufs (10) zur Klimatisierung eines Fahrzeuginnenraums, enthaltend ein erstes Kältemittel, mit einem Rankine-Kreislauf (20), enthaltend ein zweites Kältemittel, **dadurch gekennzeichnet, dass** die beiden Kreisläufe (10, 20) zumindest eine Teilstrecke aufweisen, über welche ein Wärmeaustausch der beiden Kältemittel mit einem dritten Medium vorgesehen ist, und dass in der Teilstrecke die Kältemittel aus den beiden Kreisläufen (10, 20) in gleicher Richtung parallel und benachbart zueinander strömen.

2. Kombination nach Anspruch 1, **dadurch gekennzeichnet, dass** beide Kreisläufe (10, 20) das gleiche Kältemittel enthalten, und ein Kältemittelaustausch zwischen den beiden Kreisläufen (10, 20) vorgesehen ist.

3. Kombination nach Anspruch 2, **dadurch gekennzeichnet, dass** der Kältemittelaustausch der beiden Kreisläufe (10, 20) im Bereich einer gemeinsam durchströmten Teilstrecke der Kreisläufe (10, 20) erfolgt.

4. Kombination nach Anspruch 3, **dadurch gekennzeichnet, dass** in der gemeinsamen Teilstrecke zumindest ein gemeinsamer Kondensator (12/24) für die beiden Kreisläufe (10, 20) angeordnet ist, oder die gemeinsame Teilstrecke zumindest in einem bereichsweise gemeinsam durchströmbaren Kondensator verläuft.

5. Kombination nach Anspruch 3 oder 4, **dadurch gekennzeichnet, dass** ein gemeinsamer Sammler (13/25) vorgesehen ist.

6. Kombination nach einem der Ansprüche 3 bis 5, **dadurch gekennzeichnet, dass** eine gemeinsame Unterkühlstrecke (14/26) vorgesehen ist.

7. Kombination nach Anspruch 1, **dadurch gekennzeichnet, dass** die Teilstrecke durch einen gemeinsam genutzten Kondensator (12, 24) mit parallel geführten Leitungen gebildet ist, welcher für einen Wärmeaustausch mit demselben von einem gemeinsam genutzten Medium, insbesondere Luft, durchströmbar ist.

8. Kombination nach einem der vorhergehenden Ansprüche, **dadurch gekennzeichnet, dass** im Rankine-Kreislauf (20) ein Verdampfer (22) vorgesehen ist, welcher vom Motor stammende Wärme an das Kältemittel des Rankine-Kreislaufs (20) überträgt.

9. Kombination nach einem der vorhergehenden Ansprüche **dadurch gekennzeichnet, dass** das in den Kreisläufen (10, 20) strömende Kältemittel in einem Bereich eines der Kreisläufe (20) einen überkritischen Zustand erreicht, während es im anderen Kreislauf (10) bei normalen Betriebsbedingungen keinen überkritischen Zustand erreicht.

10. Kombination nach einem der vorhergehenden Ansprüche, **dadurch gekennzeichnet, dass** R134a als Kältemittel im ORC-Kreislauf (20) dient.

11. Kombination nach einem der vorhergehenden Ansprüche, **dadurch gekennzeichnet, dass** R134a als Kältemittel im Klimaanlagen-Kältekreislauf (10) dient.

12. Kombination nach einem der vorhergehenden Ansprüche, **dadurch gekennzeichnet, dass** die beiden Kreisläufe (10, 20) unabhängig voneinander oder zumindest in der nicht gemeinsam durchströmbaren Teilstrecke unabhängig voneinander über Pumpen (11, 21), die in jedem der Kreisläufe (10 bzw. 20) vorgesehen sind, umwälzbar sind, wobei Betriebsbedingungen vorgesehen sind, bei denen der Rankine-Kreislauf (20) zumindest in der nicht gemeinsam durchströmbaren Teilstrecke steht, während der Klimaanlagen-Kältekreislauf (10) umgewälzt wird.
